Europäisches Patentamt

European Patent Office

Office européen des brevets

(19)

(11) Numéro de publication : **0 433 971 B1**

(12) **FASCICULE DE BREVET EUROPEEN**

(45) Date de publication du fascicule du brevet :
**13.04.94 Bulletin 94/15**

(51) Int. Cl.$^5$ : **G01B 7/30,** G01C 9/00,
H01Q 1/18

(21) Numéro de dépôt : **90124569.6**

(22) Date de dépôt : **18.12.90**

(54) **Dispositif de mesure des mouvements de flexion d'un mât support d'antenne et application à la commande du pointage d'une antenne motorisée.**

(30) Priorité : **22.12.89 FR 8917106**

(43) Date de publication de la demande :
**26.06.91 Bulletin 91/26**

(45) Mention de la délivrance du brevet :
**13.04.94 Bulletin 94/15**

(84) Etats contractants désignés :
**DE ES FR GB IT NL SE**

(56) Documents cités :
**EP-A- 0 106 178
EP-A- 0 107 232
GB-A- 1 474 751
US-A- 3 938 258**

(73) Titulaire : **ALCATEL TELSPACE
5, rue Noel Pons
F-92734 Nanterre Cédex (FR)**

(72) Inventeur : **De Place, Alain
115, boulevard Haussmann
F-75008 Paris (FR)**

(74) Mandataire : **Weinmiller, Jürgen et al
Lennéstrasse 9 Postfach 24
D-82336 Feldafing (DE)**

EP 0 433 971 B1

## Description

La présente invention concerne un dispositif de mesure de flexion d'un mât support d'antenne et l'application de celui-ci à la commande de pointage d'une antenne motorisée.

En effet une antenne directive montée sur un support, tel qu'un mât, est susceptible de flexions inadmissibles lorsque le mât est soumis à des forces dynamiques qui lui sont appliquées par des fluides extérieurs tels que le vent.

Le brevet français n° 2 100 522 décrit un dispositif de stabilisation de pointage d'une antenne directive montée sur un support. Ce dispositif comporte principalement un support d'antenne, un dispositif d'alimentation en énergie, un ensemble émetteur-récepteur, une antenne directive ainsi qu'un capot d'antenne de forme sphérique, destiné à stabiliser le pointage de l'antenne, dans lequel est enfermé l'ensemble d'émission-réception monté au sommet du support d'antenne. Cette disposition annule tout couple de torsion résultant des forces du fluide appliquées sur la surface extérieure du capot ; elle laisse subsister d'une part le déplacement latéral, en cas des forces appliquées sur un côté, se traduisant par un déplacement parallèle du faisceau rayonné dans le plan azimut qui est pratiquement sans action sur la liaison radioélectrique, et, d'autre part le déplacement en site, en cas de forces appliquées à l'opposé ou dans la direction de cette liaison, cette déviation restant à corriger pour assurer la liaison.

Un tel radome de forme sphérique, protégeant une antenne directive et centré sur l'axe du mât utilisé, élimine pratiquement tout effort de torsion. Mais il ne permet pas une compensation des mouvements de flexion du mât ; ce qui est l'objet de la présente invention.

Le document GB-A-1.474.751 décrit un dispositif de mesure de l'inclinaison d'un tuyau raccordé à l'une de ses extrémités à une plate-forme flottante et à l'autre de ses extrémités au fond de la mer. Des capteurs de mesure d'inclinaison sont fixés à une distance prédéterminée du fond de mer et les calculs d'inclinaison du tuyau prennent en compte cette distance pour évaluer l'inclinaison du tuyau.

Un tel dispositif ne peut convenir pour mesurer l'inclinaison d'un mât car le rayon de giration d'un mât change en fonction de sa structure et de la position d'éventuels haubans de fixation.

La présente invention a pour objectif de pallier ces inconvénients et propose un dispositif de mesure des mouvements de flexion d'un mât support d'antenne ayant un axe longitudinal, ce dispositif comprenant:

- au moins deux jeux de capteurs, les capteurs de chaque jeu étant séparés d'une distance déterminée, un premier jeu de capteurs étant dans un premier plan et le deuxième jeu de capteurs étant dans un deuxième plan, les premier et deuxième plans s'étendant parallèlement à cet axe longitudinal et étant entrecroisés entre eux, les jeux de capteurs étant fixés à proximité de l'extrémité libre du mât sur une partie rigide du mât ou sur un support fixé au mât, les jeux de capteurs mesurant la flexion du mât dans les deux plans entrecroisés;
- un organe de traitement des signaux délivrés par les capteurs, cet organe de traitement comportant des moyens de mémorisation des signaux pour en déduire les paramètres d'amplitude, de pulsation et d'amortissement du mouvement de l'extrémité libre du mât.

Les caractéristiques et avantages de l'invention ressortiront d'ailleurs de la description qui va suivre, à titre d'exemple non limitatif, en référence aux figures annexées sur lesquelles :

- la figure 1 illustre schématiquement le dispositif de l'invention ;
- la figure 2 est un schéma explicatif du fonctionnement dudit dispositif.

Le dispositif de l'invention comporte au moins deux ensembles (couples, triplets,...) de capteurs Ci, Ci+1, disposés à proximité de l'extrémité libre du mât 10 qui supporte une antenne directive 13 et séparés d'une distance d. Leurs sorties sont reliées à un organe de traitement d'information 11 comportant des moyens de mémorisation. Cet organe de traitement 11 reçoit les commandes de servitude CS du dispositif de l'invention et délivre, éventuellement des données de pointage de l'antenne 13 lorsqu'elle est motorisée, ces données étant corrigées en tenant compte des flexions antérieures du mât.

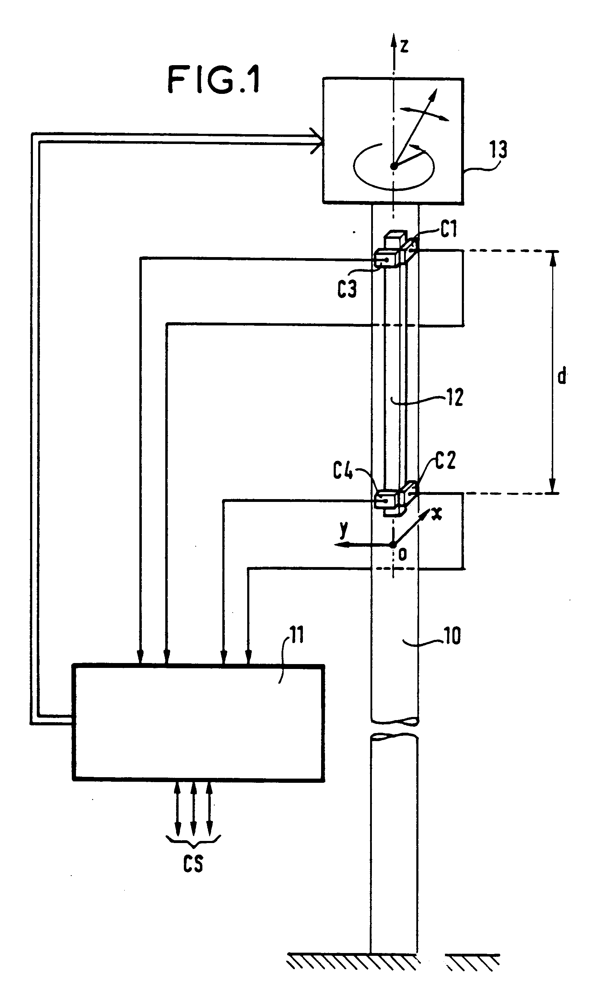

Sur la figure 1, sont représentés deux couples de capteurs C1, C2 et C3, C4. Ces capteurs peuvent être par exemple des clinomètres qui permettent de contrôler les flexions du mât 10 dans deux plans xoz et yoz perpendiculaires entre eux, pour un contrôle complet de ces flexions.

Sur la figure 1 ces couples de clinomètres sont montés sur un support commun 12, ce qui permet de réaliser plus facilement un montage en tête de mât et assure la stabilité de leur orientation relative. Le fait que ce support 12 est distinct du mât 10 rigidifie la position relative des clinomètres qui, dans ce montage, ne supportent pas la distortion apportée par la flexion propre du tronçon de mât de même longueur. Mais ces clinomètres pourraient également être montés sur une partie rigide du mât.

L'usage de couples de clinomètres permet d'obtenir une information sur l'orientation de la tête de mât indépendante du mode de flexion de celui-ci. Un clinomètre unique Ci permet, en effet, d'obtenir des informations relatives à la direction de la verticale pour des ensembles immobiles ou très lentement mobiles.

Dans une situation dynamique, par exemple lorsque la tête d'un mât est soumise aux effets du vent, les indications de ce clinomètre Ci sont fortement modifiées par l'accélération du point Mi où se trouve fixé ce clinomètre : la mesure observée étant alors la direction d'un vecteur différence entre l'accélération $\gamma$ du point Mi et l'accélération g de la pesanteur dépend à la fois de l'orientation et du mouvement de la tête de mât.

Le caractère pseudo-périodique des mouvements d'une tête de mât facilite toutefois la prévision de ces mouvements à un instant T dès lors qu'ils ont été observés pendant les instants précédents.

Les paramètres d'amplitude, pseudo-période et amortissement du mouvement, inconnus à l'origine, sont mémorisés successivement par l'organe de traitement qui peut ensuite utiliser ces données.

La connaissance des caractéristiques du mode de flexion du mât utilisé reliant le mouvement de la tête de mât et son orientation, permettrait alors de séparer ces deux paramètres et de fournir l'indication d'orientation nécessaire au pointage d'une antenne.

Avec l'usage d'un couple de clinomètres la combinaison des mesures observées permet de s'affranchir de cette contrainte.

Il n'est donc plus nécessaire de connaître à l'avance les caractéristiques de flexion du mât, ce qui est une servitude importante si on observe que cette caractéristique est propre à chaque mât, et même souvent à chaque mise en oeuvre (tension des haubans,...).

Ainsi l'information recueillie par chaque clinomètre est numérisée et mémorisée par l'organe de traitement qui effectue les extrapolations nécessaires après avoir déterminé amplitude, pseudo-période et coefficient d'amortissement du mouvement observé.

Lorsque l'antenne 13 située en tête de mât est motorisée, le dispositif de l'invention permet de piloter son orientation afin de la maintenir dans une direction donnée par rapport à la verticale.

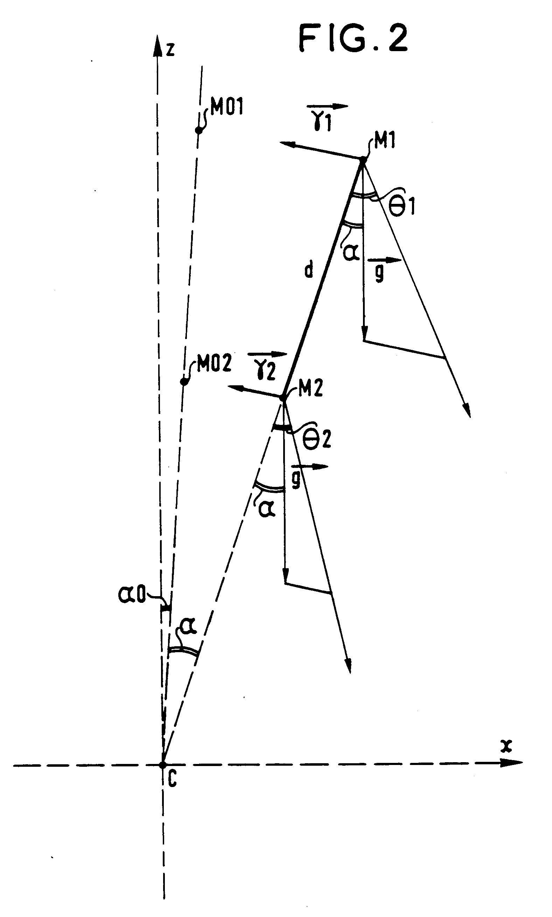

Pour une meilleure compréhension du fonctionnement du dispositif de l'invention, la figure 2 montre les différents paramètres du mouvement et les indications des clinomètres opérant dans le plan xOz, alors que le calcul simplifié donné ci-après applicable aux petits angles explique le principe de l'élimination des caractéristiques du mode de flexion.

Pour un mouvement sinusoïdal de la tête de mât autour d'un centre de giration C placé à l'origine O des axes de la figure 2, avec une position moyenne $\alpha_o$, tel que:

$$\alpha = \alpha_o + A.\sin \omega t$$

avec $\alpha$ l'angle que fait la tête de mât avec la verticale Oz, on a:

- position du capteur C1 : point M1 $(x_1, z_1)$

$$x_1 = R1 \sin \alpha$$
$$z_1 = R1 \cos \alpha$$

avec R1 le rayon de giration du mouvement du point M1 autour du centre de giration C

- position du capteur C2 : point $M_2$ $(x_2, z_2)$

$$x_2 = R2 \sin \alpha$$
$$z_2 = R2 \cos \alpha$$

avec R2 le rayon de giration du mouvement du point M2 autour du centre de giration C.

Les mesures obtenues par les deux clinomètres C1 et C2 sont les suivantes:

$$\theta 1 = \alpha + \mathrm{arctg} \frac{-\gamma_{1x}}{g - \gamma_{1z}}$$

$$\theta 2 = \alpha + \mathrm{arctg} \frac{-\gamma_{2x}}{g - \gamma_{2z}}$$

avec :

- $\theta 1$ ($\theta 2$) l'angle mesuré par le clinomètre C1 (C2) entre la tête de mât et le vecteur accélération local qui combine l'accélération due au mouvement du point M1 (M2) avec l'accélération de la pesanteur g;
- $\gamma_{1x}$ ($\gamma_{2x}$) étant la composante de l'accélération du mouvement du point M1 (M2) dans la direction Ox;
- $\gamma_{1z}$ ($\gamma_{2z}$) étant la composante de l'accélération du mouvement du point M1 (M2) dans la direction Oz;
- $d = R1 - R2$ : distance séparant M1 de M2;
- MO1 et MO2 : positions moyennes respectives de M1 et M2.

Les mouvements selon l'axe x suivent la pulsation $\omega$ et les mouvements selon l'axe z sont d'une part de faible amplitude pour les petits angles et d'autre part suivent la pulsation $2\omega$.

La valeur de $\alpha o$ est déterminée par la moyenne dans le temps de $\theta 1$ ou de $\theta 2$. $\gamma_{1z}$ et $\gamma_{2z}$ sont négligés devant g.

$\gamma_{1x}$ s'approxime en $R1\alpha$, d'où $\gamma_{1x} = R1\, A\, \omega^2 \sin \omega t$.

De même, en assimilant l'angle et la tangente on tire

$$\theta 1 - \theta 2 = \frac{\gamma_{1x} - \gamma_{2x}}{-g} = \frac{(R1 - R2)\, A\, \omega^2 \sin \omega t}{g} = \frac{d\, A\, \omega^2 \sin \omega t}{g}$$

Le terme variable de $\alpha$ A sin $\omega t$ se déduit donc directement de $\theta 1 - \theta 2$ dès que d, g et $\omega^2$ sont connus.

La mesure de $\omega$ peut être obtenue de l'observation dans le temps de $\theta 1$ ou de $\theta 2$.

La valeur de $\alpha$ exploitable par le dispositif de l'invention est obtenue par l'addition de $\alpha_o$ et de A sin $\omega t$ ainsi déterminé.

Les caractéristiques de flexion du mât considéré, reliant l'écart x à l'angle $\alpha$ en tête de mât, ne sont pas utilisées et permettent donc au dispositif de l'invention de fonctionner avec un mât quelconque.

Les capteurs utilisés peuvent être des accéléromètres. Le calcul simplifié ci-dessus n'est donné qu'à titre l'illustration.

De même, le caractère amorti des oscillations de la tête de mât qui décrit un mouvement de la forme

$$\alpha = \alpha_o + A\, e^{-\beta t} \sin \omega t$$

ne nuit pas à la possibilité d'évaluation de l'angle $\alpha$,

car le coefficient d'amortissement β de l'angle α est mesuré comme ω par l'observation dans le temps de θ1 et de θ2 mémorisés par l'organe de traitement.

## Revendications

1. Dispositif de mesure des mouvements de flexion d'un mât (10) support d'antenne ayant un axe longitudinal (Z), caractérisé en ce qu'il comprend:
   - au moins deux jeux de capteurs (C1, C2 ; C3, C4), les capteurs de chaque jeu (C1, C2 ; C3, C4) étant séparés d'une distance déterminée (d), un premier jeu de capteurs (C1, C2) étant dans un premier plan (XOZ) et le deuxième jeu de capteurs (C3, C4) étant dans un deuxième plan (YOZ), lesdits premier et deuxième plans (XOZ, YOZ) s'étendant parallèlement audit axe longitudinal (Z) et étant entrecroisés entre eux, lesdits jeux de capteurs étant fixés à proximité de l'extrémité libre dudit mât (10) sur une partie rigide dudit mât ou sur un support (12) fixé audit mât (10), lesdits jeux de capteurs (C1,C2 ; C3,C4) mesurant la flexion dudit mât (10) dans lesdits deux plans entrecroisés (XOZ, YOZ);
   - un organe de traitement (11) des signaux délivrés par lesdits capteurs (C1, C2, C3, C4), ledit organe de traitement (11) comportant des moyens de mémorisation desdits signaux pour en déduire les paramètres d'amplitude, de pulsation et d'amortissement du mouvement de ladite extrémité libre dudit mât (10).

2. Dispositif selon la revendication 1, caractérisé en ce que lesdits capteurs (C1, C2, C3, C4) sont des clinomètres.

3. Dispositif selon la revendication 1, caractérisé en ce que lesdits capteurs (C1, C2, C3, C4) sont des accéléromètres.

4. Dispositif selon la revendication 1, caractérisé en ce que ledit mât (10) comporte une antenne motorisée (13) à proximité de ladite extrémité libre dudit mât (10) et en ce que ledit dispositif comporte également des moyens de couplage dudit organe de traitement (11) au moteur de positionnement de ladite antenne (13) pour contrôler la position de ladite antenne (13) en réponse à la flexion dudit mât (10) dans lesdits deux plans croisés (XOZ, YOZ).

## Patentansprüche

1. Anordnung zum Messen der Biegebewegungen eines Antennenträgermasts (10), der eine Längsachse (Z) besitzt, dadurch gekennzeichnet, daß er aufweist:
   - mindestens zwei Sensorgruppen (C1, C2,; C3, C4), wobei die Sensoren jeder Gruppe (C1, C2; C3, C4) einen bestimmten Abstand (d) voneinander besitzen und sich eine erste Sensorgruppe (C1, C2) in einer ersten Ebene (XOZ) und die zweite Sensorgruppe (C3, C4) in einer zweiten Ebene (YOZ) befindet, wobei sich die erste und die zweite Ebene (XOZ, YOZ) parallel zu dieser Längsachse (Z) erstrecken und einander kreuzen, wobei die Sensorgruppen in der Nähe des freien Endes des Mastes (10) an einem steifen Abschnitt des Masts oder auf einem am Mast (10) befestigten Träger (12) befestigt sind, wobei die Sensorgruppen (C1, C2 - C3, C4) die Biegung des Masts (10) in den beiden sich kreuzenden Ebenen (XOZ, YOZ) messen,
   - eine Einrichtung (11) zur Verarbeitung der von den Sensoren (C1, C2, C3, C4) gelieferten Signale, die Mittel zur Speicherung der Signale aufweist, um aus diesen die Amplituden-, Schwingungs- und Dämpfungsparameter der Bewegung des freien Endes des Masts (10) abzuleiten.

2. Anordnung nach Anspruch 1, dadurch gekennzeichnet, daß die Sensoren (C1, C2, C3, C4) Neigungsmesser sind.

3. Anordnung nach Anspruch 1, dadurch gekennzeichnet, daß die Sensoren (C1, C2, C3, C4) Beschleunigungsmesser sind.

4. Anordnung nach Anspruch 1, dadurch gekennzeichnet, daß der Mast (10) eine motorisch angetriebene Antenne (13) in der Nähe des freien Endes des Masts (10) ist und daß die Anordnung auch Mittel zum Ankoppeln der Verarbeitungseinrichtung (11) an den Positionierungsmotor der Antenne (13) enthält, um die Stellung der Antenne (13) entsprechend der Biegung des Masts (10) in den beiden gekreuzten Ebenen (XOZ, YOZ) zu steuern.

## Claims

1. Apparatus for measuring bending movements of an antenna support mast (10) having a longitudinal axis (Z), the apparatus being characterized in that it comprises:

at least two sets of sensors (C1, C2; C3, C4), the sensors in each set (C1, C2; C3, C4) being spaced apart by a determined distance (d), a first set of sensors (C1, C2) being in a first plane (XOZ) and a second set of sensors (C3, C4) being in a second plane (YOZ), said first and second planes (XOZ, YOZ) extending parallel to said longitudinal axis (Z) and crossing each other, said sets of sensors being fixed close to the free end of said mast (10) on a rigid portion of said mast or on a support (12) fixed to said mast (10), said sets of sensors (C1, C2 - C3, C4) measuring the bending of said mast (10) in said two crossed planes (XOZ, YOZ); and

a processor (11) for processing the signals delivered by said sensors (C1, C2, C3, C4), said processor (11) including means for storing said signals to deduce therefrom parameters of amplitude, of angular frequency, and of damping concerning the movement of said free end of said mast (10).

2.  Apparatus according to claim 1, characterized in that said sensors (C1, C2, C3, C4) are clinometers.

3.  Apparatus according to claim 1, characterized in that said sensors (C1, C2, C3, C4) are accelerometers.

4.  Apparatus according to claim 1, characterized in that said mast (10) includes a motor-driven antenna (13) close to said free end of said mast (10), and in that said apparatus also includes means for coupling said processor (11) to the positioning motor of said antenna (13) to control the position of said antenna (13) in response to the bending of said mast (10) in said two offset planes (XOZ, YOZ).

# FIG.1

FIG.2